# EUROPÄISCHE PATENTSCHRIFT

(11) **EP 0 764 239 B1**
(45) Veröffentlichungstag und Bekanntmachung des Hinweises auf die Patenterteilung: **13.08.2003**
(21) Anmeldenummer: 96903911.4
(22) Anmeldetag: 28.02.1996
(51) Int. Cl.: F02D 41/22, F02D 11/10, G01D 5/165

(54) **VERFAHREN UND VORRICHTUNG ZUM TESTEN DES GESAMTEN EINGANGSPFADES EINES RECHENELEMENTS BIS HIN ZUR KORREKTEN ADRESSIERUNG UND SPEICHERUNG DES MESSWERTES BEI EINER MESSWERTERFASSUNG BEI EINER MOTORLEISTUNGSSTEUERUNG EINES FAHRZEUGMOTORS**
METHOD AND DEVICE FOR MONITORING DATA MEASUREMENT IN AN ELECTRONIC VEHICLE-ENGINE POWER-CONTROL UNIT, INCLUDING THE TEST OF CORRECT ADRESSING AND FILING OF THE MEASURED VALUES
PROCEDE ET DISPOSITIF DE SURVEILLANCE DES VALEURS MESUREES D'UN SYSTEME ELECTRONIQUE DE COMMANDE DE PUISSANCE D'UN MOTEUR DE VEHICULE, AINSI QUE D'ADRESSAGE ET DE SAUVEGARDE DE CES VALEURS

(30) Priorität: 07.04.1995 DE 19513081
(43) Veröffentlichungstag der Anmeldung: 26.03.1997
(73) Patentinhaber: ROBERT BOSCH GMBH, 70442 Stuttgart (DE)
(72) Erfinder: PFEUFER, Reinhard, D-71696 Möglingen (DE); MÜLLER, Margit, D-71679 Asperg (DE); HAAG, Wolfgang, D-71364 Winnenden (DE); BEDERNA, Frank, D-70825 Korntal-Münchingen (DE)
(86) Internationale Anmeldenummer: DE9600332
(87) Internationale Veröffentlichungsnummer: WO96031690

(56) Entgegenhaltungen:
- EP-A- 0 354 269
- DE-A- 3 621 937
- US-A- 5 207 091
- PATENT ABSTRACTS OF JAPAN vol. 6, no. 103 (E-112), 12.Juni 1982 & JP,A,57 035419 (HONDA MOTOR CO LTD), 26.Februar 1982,

## Beschreibung

### Stand der Technik

Die Erfindung betrifft ein Verfahren und eine Vorrichtung zum Testen des gesamten Eingangspfades eines Rechenelements bis hin zur korrekten Adressierung und Speicherung des Messwertes bei einer der Meßwerterfassung bei einer Motorleistungssteuerung eines Fahrzeugmotors gemäß den unabhängigen Patentansprüchen.

Ein derartiges Verfahren bzw. eine derartige Vorrichtung ist aus der DE-A-36 21 937 (US-Patent 5,107,427) bekannt. Dort wird zur Fehlererkennung im Bereich der Meßwerterfassung einer elektronischen Leistungssteuerung, insbesondere von Fehlern in A/D-Schnittstellen oder den Kanälen eines gemultiplexten A/D-Wandlers der elektronischen Steuereinheit des Leistungssteuerungssystems, die von einer Meßeinrichtung erfaßte Betriebsgröße der Leistungssteuerung beeinflußt. Dies erfolgt durch die Abschaltung der Masseleitung des als Potentiometer ausgeführten Stellungsgebers eines Fahrpedals und/oder einer Drosselklappe mittels eines vom Rechenelement der Steuereinheit betätigbaren Schaltelements. Überschreitet die von der Meßeinrichtung im abgeschalteten Zustand erfaßte Meßgröße vorgegebene oder aus der eingelesenen Versorgungsspannung der Meßeinrichtung abgeleitete Grenzwerte, wird ein Fehlerzustand erkannt.

In einigen Anwendungsfällen hat es sich erwiesen, daß diese Vorgehensweise nicht immer zufriedenstellend ist. Da bei der Überwachung eine Steuergröße der Leistungssteuerung verändert wird, kann diese während der Überwachungszeit nicht ausgeführt werden.

Ferner hat sich gezeigt, daß infolge der Toleranzen im Bereich des Schaltelements, der Meßeinrichtungen sowie der Zuleitungen zur Steuereinheit im Normalbetrieb der Überwachungsvorgang, während dem die elektronische Leistungssteuerung nicht durchgeführt werden kann, relativ viel Zeit (im Bereich von einigen 100 Millisekunden) in Anspruch nimmt. Darüber hinaus sind im Bereich des Schaltelements zusätzliche Schaltungsmaßnahmen, insbesondere mit Blick auf die Kurzschlußfestigkeit des Schaltelements nach Batterie bzw. Versorgungsspannung notwendig.

Es ist Aufgabe der Erfindung, Maßnahmen anzugeben, die eine möglichst präzise, die Leistungssteuerung nicht oder nur wenig beeinflussende Überwachung der Meßwerterfassung bieten, ohne daß zusätzliche Schwierigkeiten im Bereich der Schaltungstechnik auftreten.

Dies wird durch die kennzeichnenden Merkmale der unabhängigen Patentansprüche erreicht.

Aus der DE-A- 42 04 623 ist ebenfalls ein Verfahren bzw. eine Vorrichtung zur Überwachung der Meßwerterfassung einer elektronischen Leistungssteuerung bekannt. Auch dort wird vom Rechenelement mittels eines Schaltelements die Masseleitung einer Meßeinrichtung zur Erfassung einer Fahrpedaloder Drosselklappenstellung unterbrochen. Da in diesem Fall nicht die eine Führungsgröße der Leistungssteuerung ermittelnde Meßeinrichtung, sondern eine zu Überwachungszwecken vorgesehene, redundante Meßeinrichtung der Überwachung zugrundegelegt wird, treten die Probleme bezüglich Genauigkeit bzw. Schnelligkeit und bezüglich der Unterbrechung der Leistungssteuerung nicht in dem obigen Maße auf. Zusätzliche Schaltungsmaßnahmen zur Sicherung der Funktionsfähigkeit müssen jedoch auch hier aufgewendet werden.

Schließlich ist in der EP-A-354 269 ein Verfahren und eine Schaltungsanordnung zur Überwachung des Übergangswiderstandes eines Potentiometers vorgeschlagen. Dort wird zu vorbestimmten Zeitpunkten vom Rechenelement der elektronischen Leistungssteuerung der Signalleitungspegel über ein Schaltelement nach Masse geschaltet und aus den im Rechenelement zur Verfügung stehenden Größen bezüglich Potentiometerstellung, Spannung im zugeschalteten Zustand sowie Versorgungsspannung der aktuelle Übergangswiderstand des Potentiometers berechnet. Maßnahmen zur Überwachung der Meßwerterfassung werden nicht beschrieben, so daß ein Fehlerzustand im Bereich des A/D-Wandlers des Rechenelements zu einer fehlerhaften Funktionsweise der Leistungssteuerung führt.

### Vorteile der Erfindung

Durch die erfindungsgemäße Vorgehensweise zur Überwachung der Meßwerterfassung bei einer elektronischen Leistungssteuerung eines Fahrzeugmotors werden zusätzliche Schwierigkeiten im Schaltungsaufbau vermieden und dennoch eine umfassende Überwachung gewährleistet.

Besonders vorteilhaft ist, daß ein vom Rechner ausgegebenes Signal direkt auf wenigstens einen seiner Eingangskanäle einwirkt auf eine Beeinflussung der Führungsgröße verzichtet wird und keine zusätzlichen Schwierigkeiten in der Schaltungstechnik auftreten.

Ferner ist die Überwachung durch Verstimmung der Versorgungsspannung wenigstens einer Meßeinrichtung vorteilhaft.

In vorteilhafter Weise wird durch die erfindungsgemäße Vorgehensweise der gesamte Eingangspfad des Rechenelements bis hin zur korrekten Adressierung und Speicherung im Rechner auf Funktion und Aktualisierung getestet. Mit der erfindungsgemäßen Vorgehensweise erkennt das Rechenelement daher selbsttätig einen Fehler, ohne daß eine Reaktion des Fahrers zu erwarten ist.

Besonders vorteilhaft ist die Anwendung der erfindungsgemäßen Vorgehensweise im Rahmen einer elektronischen Leistungssteuerung eines Fahrzeugmotors, welche mit einem einzigen Mikrocomputer betrieben wird. Dadurch kann auf die redundante Auslegung der Steuereinheit verzichtet werden und dennoch die Betriebssicherheit der Anlage sichergestellt werden.

Besonders vorteilhaft ist die Anwendung der erfindungsgemäßen Vorgehensweise in Verbindung mit wenigstens einem Stellungssensor für die Stellung eines vom Fahrer betätigbaren Bedienelements, insbesondere eines Fahrpedals. Da dieser aus Sicherheitsgründen in der Regel wenigstens redundant ausgelegt ist, ergibt sich eine vorteilhafte Anwendung der erfindungsgemäßen Vorgehensweise in Verbindung mit der zweiten Meßeinrichtung, die zur Überwachung der ersten Meßeinrichtung dient. Dadurch wird die Funktion der Leistungsteuerung auch bei einem langsameren Ablauf der Überwachung nicht gestört.

Besonders vorteilhaft ist das Verziehen der Versorgungsspannung für wenigstens eine Meßeinrichtung, insbesondere wenigstens eines Stellungssensors für das Fahrpedal. Diese vorteilhafte Ausführungsform kommt ohne zusätzlichen Hardwareaufwand aus und kann, insbesondere bei Doppelsensoren für die Fahrpedalstellung, auf beide Kanäle angewendet werden. In vorteilhafter Weise kann dann der gesamte Eingangskanal inklusive Meßeinrichtung geprüft werden.

Durch die zeitliche Korrelation zwischen Ansteuerung und Fehlererkennung ergibt sich eine zuverlässige, zweifelsfreie Fehlererkennung.

Weitere Vorteile ergeben sich aus der nachfolgenden Beschreibung von Ausführungsbeispielen sowie aus den abhängigen Patentansprüchen.

### Zeichnung

Die Erfindung wird nachstehend anhand der in der Zeichnung dargestellten Ausführungsformen näher erläutert. Dabei zeigt Figur 1 ein Übersichtsblockschaltbild der elektronischen Leistungssteuerung. Figur 2 zeigt ein erstes Ausführungsbeispiel, Figur 3 ein weiteres Ausführungsbeispiel der erfindungsgemäßen Vorgehensweise. Figur 4 deutet anhand eines Flußdiagramms eine Realisierung der erfindungsgemäßen Überwachung als Rechnerprogramm für das erste, bevorzugte Ausführungsbeispiel an.

### Beschreibung von Ausführungsbeispielen

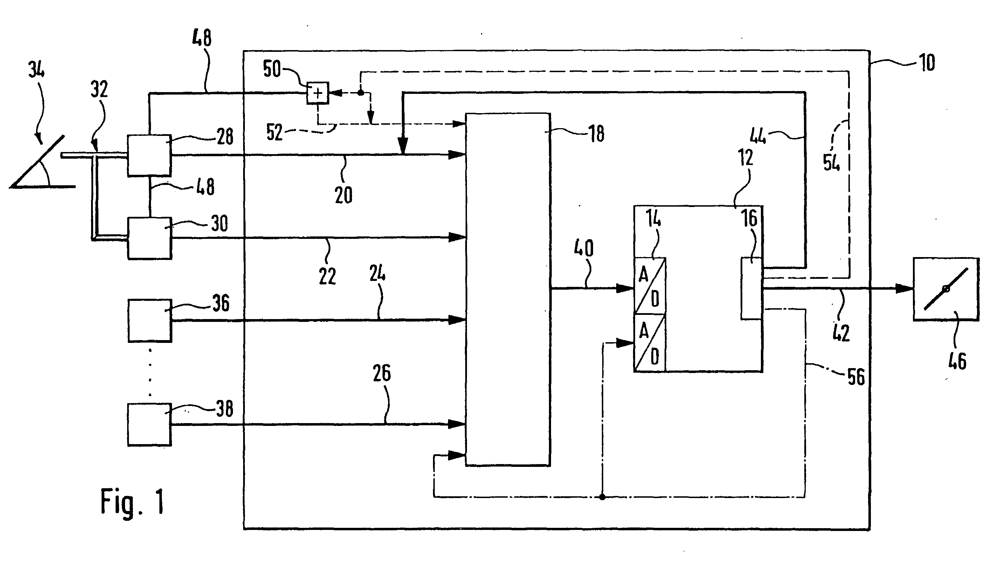

In Figur 1 ist ein bevorzugtes Ausführungsbeispiel einer elektronischen Leistungssteuerung für einen Fahrzeugmotor dargestellt. Dabei ist mit 10 eine Steuereinheit dargestellt, welche einen einzigen Mikrocomputer 12 aufweist. Dieser Mikrocomputer 12 umfaßt unter anderem wenigstens einen A/D-Wandler (ADC) 14 sowie eine Ausgangsschaltung 16. Ferner weist die Steuereinheit 10 einen Multiplexer 18 auf.

Die Darstellung der Steuereinheit 10 ist aus Übersichtlichkeitsgründen nicht vollständig. Es wurden lediglich die zum Verständnis der erfindungsgemäßen Vorgehensweise notwendigen Elemente dargestellt.

Dem Multiplexer 18 und damit der Steuereinheit 10 werden Eingangsleitungen 20, 22 sowie 24 bis 26 zugeführt. Die Leitungen 20 und 22 verbinden dabei die Steuereinheit 10 mit Meßeinrichtungen 28 und 30, die über eine mechanische Verbindung 32 mit einem vom Fahrer betätigbaren Bedienelement 34, vorzugsweise einem Fahrpedal, verbunden sind. Die Leitungen 24 bis 26 verbinden die Steuereinheit 10 mit Meßeinrichtungen 36 bis 38 zur Erfassung weiterer analoger Betriebsgrößen, wie z.B. Motortemperatur, Drosselklappenposition. Vom Multiplexer 18 geht eine Eingangsleitung 40 auf den ADC 14 des Mikrocomputers 12. An dessen Ausgangsschaltung 16 sind Ausgangsleitungen 42 und 44 angeschlossen. Die Ausgangsleitung 42 stellt dabei die Ausgangsleitung der Steuereinheit 10 dar und führt auf ein elektrisch betätigbares Stellelement 46 zur Beeinflussung der Leistung des Antriebsmotors, insbesondere ein elektrisches Stellelement für die Drosselklappe einer Brennkraftmaschine. Eine zweite Ausgangsleitung 44 führt auf eine der Eingangsleitungen 20 bis 26, auf die der Mikrocomputer 12 direkt und damit auf die über diese Leitung zugeführte Meßgröße einwirkt.

Die Meßeinrichtungen 28 und 30 werden in einem bevorzugten Ausführungsbeispiel über die Leitung 48 von einer gemeinsamen Versorgungsspannungsquelle 50 versorgt. Die Versorgungsspannung wird dabei in einem vorteilhaften Ausführungsbeispiel (strichliert dargestellt) über die Leitung 52 vom Mikrocomputer 12 eingelesen. Der Mikrocomputer 12 kann ferner über die Leitung 54 auf die Versorgungsspannungsquelle 50 bzw. die Rückmeldungsleitung 52 einwirken. Entsprechend kann in anderen vorteilhaften Ausführungsbeispielen die Versorgungsspannungsquelle bei getrennten Versorgungen der Meßeinrichtungen 28 und 30 nur die Versorgung nur einer der Meßeinrichtungen oder die Versorgung für wenigstens eine der Meßeinrichtungen 36 bis 38 beeinflußt werden.

In einem weiteren ergänzenden vorteilhaften Ausführungsbeispiel (strichpunktiert) verfügt der Mikrocomputer 10 über die Ausgangsleitung 56, die über den Multiplexer 18, die Leitung 40 und den ADC 14 vom Mikrocomputer 12 oder direkt vom Mikrocomputer 12 wieder eingelesen wird.

Im Normalbetrieb erfaßt der Mikrocomputer 12 über den Multiplexer 18 und seinen ADC 14 die von den Meßeinrichtungen 28 und 30 ermittelten Stellungswerte für das Fahrpedal. Aus dem Meßwert der Meßeinrichtung 30 bildet er aus einer vorgegebenen Kennlinie bzw. einem vorgegebenen Kennfeld, ggf. unter Berücksichtigung weiterer Betriebsgrößen wie Motordrehzahl, Gangübersetzung, etc., einen Sollwert für die Stellung des Stellelements 46. Dieses wird im Rahmen eines Lageregelkreises im Sinne einer Annäherung des Istwertes an den Sollwert eingeregelt. Bei einer derartigen Leistungssteuerung wird die vom Motor abgegebene Leistung aufgrund des von der Meßeinrichtung 30 erfaßten Betätigungswertes des Fahrpedals 34 eingestellt.

Fehler im Bereich dieser Meßwerterfassung, der Übermittlung zum Mikrocomputer 12 oder beim Einlesen in den Mikrocomputer 12 können daher ungewollt Betriebszustände hervorrufen. Zur Überwachung der Meßgrößenerfassung im Bereich der Meßeinrichtung 30 ist eine zur Meßeinrichtung 30 redundante Meßeinrichtung 28 vorgesehen, deren Meßwert ebenfalls vom Mikrocomputer 12 eingelesen wird. Ein Fehler in einem der Meßeinrichtungen wird erkannt, wenn die beiden von den Meßeinrichtungen 28 und 30 ermittelten Werte unzulässig voneinander abweichen.

Ferner sind Maßnahmen zu treffen, die eine ausreichende Überwachung zumindest der Übermittlung der Meßwerte zum Mikrocomputer 12 oder beim Einlesen in den Mikrocomputer erlaubt. Wird zur Leistungssteuerung lediglich ein Mikrocomputer 12 verwendet, können trotz der redundanten Auslegung der Meßeinrichtungen Fehlerzustände auftreten, wenn der Mikrocompter 12 die eingelesenen Stellungswerte infolge von Fehlerzuständen im Multiplexer 18, im ADC 14 oder in seiner internen Berechnung und Speicherung nicht mehr aktualisiert. Dann sind die beiden Stellungsmeßwerte zwar zueinander im Toleranzbereich, repräsentieren aber dennoch falsche Meßwerte.

Um derartige Fehlerzustände zu erkennen, ist daher erfindungsgemäß vorgesehen, daß der Mikrocomputer 10 zu vorgegebenen Zeitpunkten ein Signal ausgibt, welches direkt auf wenigstens einen Eingangskanal, über den eine Meßgröße eingelesen wird, einwirkt, bzw. ein Signal, welches durch Verstimmen der Versorgungsspannung wenigstens einer Meßeinrichtung zur Erfassung einer Betriebsgröße indirekt auf einen Eingangskanal einwirkt. Ein Fehlerzustand wird dann erkannt, wenn ein- oder mehrmalig der zeitlich mit der Ausgabe des Signals korrelierende, erwartete Signalwert nicht erkannt wird. Dies erfolgt zweckmäßiger Weise dadurch, daß der Signalwert mit vorgegebenen Grenzwerten verglichen wird und bei Überschreiten wenigstens eines vorgegebenen Grenzwertes durch die eingelesene, manipulierte Meßgröße ein Fehler erkannt wird.

Nach einer anderen Lesart, bei Schalten der Meßgröße auf niedrige Werte, wird ein Fehler erkannt, wenn der vorgegebene Wertebereich nicht erreicht wird, das heißt, der Grenzwert nicht unterschritten wird. Bei Schalten zu höheren Werten wird der Fehler erkannt, wenn der Grenzwert nicht überschritten wird.

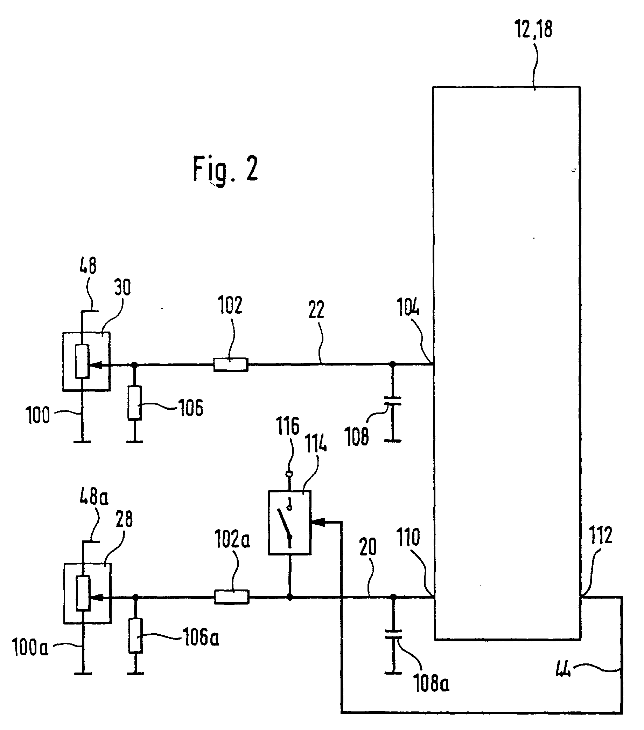

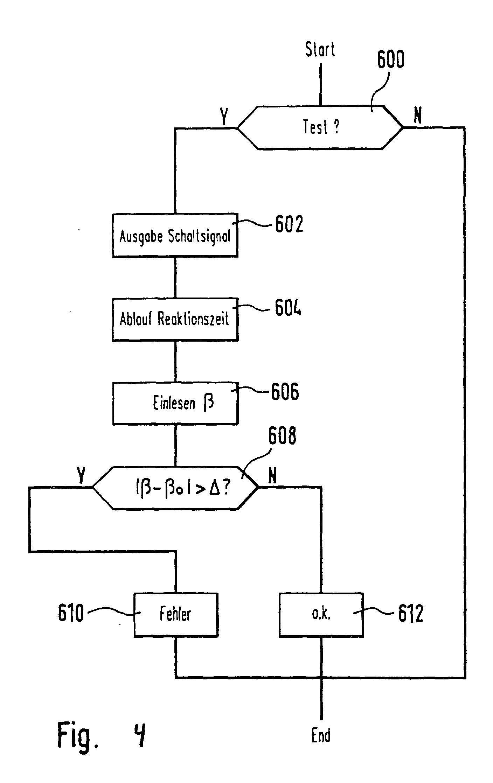

Dabei wird in einem ersten Ausführungsbeispiel (vgl. Figur 2 und 4) die wenigstens einer der Meßeinrichtungen 28 und 30, vorzugsweise der Meßeinrichtung 28, zugeordnete Eingangsleitung mittels eines vom Rechner 12 ausgegebenen Schaltsignals auf einen vorgegebenen Signalpegel gezogen. Wird ein zeitlich mit der Ausgabe des Schaltsignals korreliert der erwartete Signalwert vom Mikrocomputer nicht erkannt, wird ein Fehlerzustand im Bereich der Meßwerterfassung angenommen.

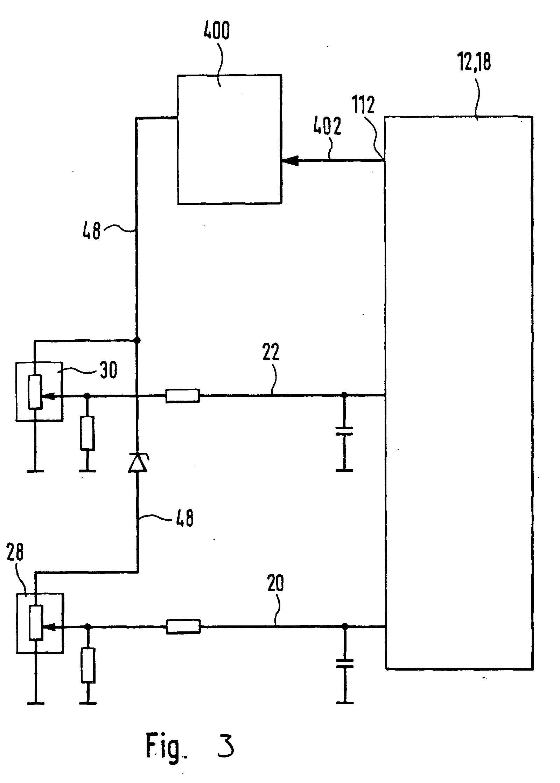

Gemäß einer weiteren Ausführungsform (Figur 3) wird die Versorgungsspannung wenigstens einer Meßeinrichtung verändert. Diese Vorgehensweise eignet sich besonders bei Systemen, bei denen für die Meßwertgeber eine gemeinsame Spannungsversorgung durch eine diskret aufgebaute Schaltung, z.B. einen Stromspiegel, gebildet wird. Der Mikrocomputer greift in diese Schaltung derart ein, daß die Versorgungsspannung auf einen vorgegebenen Pegel geschaltet wird. Durch Einlesen der Meßwerte der Meßeinrichtungen und Vergleich mit vorgegebenen Grenzwerten wird, wie oben dargestellt, ein Fehlerzustand erkannt.

Im Ausführungsbeispiel nach Figur 2 stellen die Meßeinrichtungen 28 und 30 Potentiometer zur Stellungserfassung eines Fahrpedals dar. Über die Leitung 48, 48a sind die Potentiometer an eine Spannungsquelle, über Leitungen 100, 100a an Masse angeschlossen. Die Schleiferleitung 22 der Meßeinrichtung 30 führt über einen Widerstand 102 zum Eingang 104 des Mikrocomputers 12. An der Leitung 22 sind zwischen Potentiometer und Widerstand 102 ein weiterer Widerstand 106, zwischen Widerstand 102 und Eingang 104 ein Kondensator 108 gegen Masse geschaltet. In analoger Weise wird das Meßsignal des Potentiometers 28 auf einen anderen Eingang 110 des Mikrocomputers 12 geführt. Ein Ausgang 112 des Mikrocomputers 12 ist mit der Leitung 44 belegt. Diese führt im bevorzugten Ausführungsbeispiel auf ein Schaltelement 114, welches zwischen die Leitung 20 und einer Referenzspannungsquelle 116 geschaltet ist. Das Schaltelement 114 ist dabei in vorteilhafter Weise zwischen Widerstand 102a und Kondensator 108a angeschlossen. Als Referenzspannung, die an den Anschluß 116 geführt ist, ist eine Spannung zu verwenden, die außerhalb des Meßsignalspannungsbereichs des Potentiometers 28 liegt. Als geeignet hat sich dabei insbesondere Massepotential bzw. eine Referenzspannung zwischen 0 und der Minimalspannung des Potentiometersignalbereichs (z.B. 0,5V) erwiesen. Ein Anschluß an die Versorgungsspannung bzw. an einen Spannungswert zwischen Versorgungsspannung (z.B. 5V) und maximaler Meßsignalspannung (z.B. 4,5V) ist ebenfalls vorteilhaft.

Bei dem Schaltelement 114 handelt es sich im bevorzugten Ausführungsbeispiel um einen Schalttransistor, der mit seinem Kollektor direkt an die Leitung 20 angeschlossen ist. In einem besonders vorteilhaften Ausführungsbeispiel wird bei entsprechender Dimensionierung der Ausgang 112 des Mikrocomputers direkt ohne Schaltelement an die Leitung 20 zum Schalten der Leitung 20 auf Masse oder einen anderen Potentialwert angeschlossen.

Der Mikrocomputer erzeugt an seinem Ausgang 112 ein Schaltsignal, welches die Eingangsspannung des hinter dem Eingang 110 liegenden ADC auf einen Referenzspannungspegel schaltet. Da der Rechner den Zeitpunkt kennt, an dem er den Schalter ansteuert, erwartet er innerhalb eines vorgegebenen Zeitfensters eine bestimmte Rückmeldung an seinem Eingangskanal bzw. an seinem intern gewandelten Wert in seiner Speicherzelle. Stimmt diese Rückmeldung nicht mit den erwarteten Werten überein, wird auf einen Fehlerzustand geschlossen.

Diese Vorgehensweise ist anhand des Flußdiagramms nach Figur 4 dargestellt. Nach Start des dort beschriebenen Programmteils wird im ersten Schritt 600 überprüft, ob die Bedingungen für einen Überwachungsvorgang vorliegen. In einem bevorzugten Ausführungsbeispiel findet dieser zu vorgegebenen Zeitpunkten oder nach Ablauf einer bestimmten Betriebsdauer statt. Ein wesentlicher Vorteil ist, daß die Prüfung immer, unabhängig vom Betriebszustand, möglich ist..

Andernfalls wird im Schritt 602 das Schaltsignal ausgegeben und im darauffolgenden Schritt 604 die vorgegebene Reaktionszeit abgewartet. Ist diese abgelaufen, wird im Schritt 606 der Meßwert ß eingelesen und im darauffolgenden Schritt 608 dieser mit dem vorgegebenen Wert β0 verglichen. Ist der Betrag der Differenz größer als ein vorbestimmter Toleranzwert Δ, wird gemäß Schritt 610 von einem Fehler ausgegangen. Im anderen Fall wird gemäß Schritt 612 die Meßwerterfassung als funktionsfähig erkannt. Nach den Schritten 610 und 612 wird der Programmteil beendet und zu gegebener Zeit wiederholt.

Selbstverständlich kann die Erkennung des Fehlers abhängig sein vom mehrmaligen Erkennen des Fehlers bzw. von der Häufigkeit des Fehlerauftretens. Dabei wird bei jedem Programmlauf ein Zähler inkrementiert, wenn ein Fehler vorliegt, dekrementiert, wenn kein Fehler vorliegt. Überschreitet der Zählerstand einen vorgegebenen Wert, wird die Meßwerterfassung als fehlerhaft erkannt.

Besonders vorteilhaft ist, die im ersten Ausführungsbeispiel beschriebene Vorgehensweise auf die zur Überwachung der Führungsgröße der Leistungssteuerung dienende Meßgröße anzuwenden. Dadurch kann ein langsamerer Ablauf (z.B. 100 Millisekunden) gewählt werden, ohne daß die Leistungssteuerung gestört wird. Ein Vorteil ist, daß durch kurze Prüfzeiten innerhalb der Fehlererkennungszeit der Vergleich zwischen den beiden Stellungsmeßsignalen zur Fehlererkennung nicht ausgesetzt werden muß.

Im Rahmen des ersten Ausführungsbeispiels wird der gesamte Pfad, vom Eingang des A/D-Kanals, über die A/D-Wandlung selbst bis zur korrekten Adressierung und Speicherung im Rechner auf Funktionsfähigkeit und Aktualisierung getestet. Bei einem Schalten auf ein vorgegebenes Referenzpotential, kann der gewandelte Wert zusätzlich im Rahmen der Schaltungstoleranzen quantitativ überprüft werden.

Eine weitere vorteilhafte Ausgestaltung ist anhand des Ausführungsbeispiels nach Figur 3 dargestellt. dort ist eine Stromspiegelschaltung 400 zur gemeinsamen Spannungsversorgung der Meßeinrichtungen 28 und 30 dargestellt. Über einen Ausgang 112 kann das Mikrocomputersystem über die Leitung 402 diese Versorgungsspannungsquelle direkt beeinflussen. Vorzugsweise führt der Eingriff zu einem Absenken der Versorgungsspannung. Auf diese Weise werden die über die Leitungen 20 und 22 eingelesenen Meßwerte verändert. Korreliert die Veränderung der Meßsignalwerte mit dem Eingriff über die Leitung 402 in vorgegebenen Toleranzbereichen, so wird von einer Funktionsfähigkeit ausgegangen. Im anderen Fall wird ein Fehlerzustand erkannt. Durch diese Vorgehensweise wird zwar die Führungsgröße der elektronischen Leistungssteuerung verändert, dies jedoch nur kurzzeitig. In diesem Beispiel muß die Prüfung schnell erfolgen, weil die Führungsgröße beeinflußt wird. Während des Eingriffs auf die Versorgungsspannung muß die Verwendung der Führungsgröße ausgesetzt werden. Diese Vorgehensweise gewährleistet die Überwachung beider Eingangskanäle sowie des gesamten Pfades von der Meßeinrichtung bis zur internen Speicherzelle des Mikrocomputers.

## Patentansprüche

1. Verfahren zum Testen des gesamten Eingangspfades eines Rechenelements bis hin zur korrekten Adressierung und Speicherung eines Messwertes bei einer Messwerterfassung bei einer Motorleistungssteuerung eines Fahrzeugmotors, wobei wenigstens eine Messeinrichtung (28) vorgesehen ist, die wenigstens den Messwert einer Messgröße für eine Betriebsgröße des Motors oder des Fahrzeugs ermittelt und dieser Messwert bei der Motorleistungssteuerung verwertet wird, wobei ein Rechenelement (12, 18) vorgesehen ist, das über wenigstens einen Analog- /Digitalwandler (14) einen Messwert (β) der wenigstens einen Messgröße einliest und das Rechenelement (12, 18) zu Testzwecken während des Betriebs der Motorleistungsstueuerung zu vorgegebenen Zeitpunkten durch Ausgabe wenigstens eines Ausgangsignals den eingelesenen Messwert charakteristisch verändert, wobei das Rechenelement zum Test die folgenden Schritte durchführt:
- Abgeben eines Ausgangssignals (602) zu vorgegebenen Zeitpunkten, welches direkt auf einen Eingangskanal, über den der Messwert eingelesen wird, oder indirekt über eine Veränderung der Spannung der Versorgungsspannungsquelle der Messeinrichtung auf einen Eingangskanal, über den der Messwert eingelesen wird, einwirkt,
- Erfassen des so veränderten Messwertes (606) in zeitlicher Korrelation mit der Ausgabe des Ausgangssignals,
- Vergleichen des erfassten veränderten Messwertes mit einem vorgegebenen Wert (608),
- Erkennen eines Fehlers (610), wenn der erfasste veränderte Messwert dem vorgegebenen Wert nicht entspricht.

2. Verfahren nach Anspruch 1, **dadurch gekennzeichnet, daß** von der Meßeinrichtung eine Meßsignalleitung zu einem Eingang des Rechenelements führt, wobei der Signalpegel auf dieser Leitung durch das vom Rechenelement ausgegebene Ausgangssignal auf einen vorgegebenen Spannungspegel gezogen wird.

3. Verfahren nach Anspruch 2, **dadurch gekennzeichnet, daß** dieser Spannungspegel außerhalb des Meßsignalpegelbereichs der Meßeinrichtung liegt, vorzugsweise Masse darstellt.

4. Verfahren nach Anspruch 2, **dadurch gekennzeichnet, daß** der Meßwert über einen Widerstand und einen gegen Masse geschalteten Kondensator dem Rechenelement zugeführt wird, wobei die Signalleitung, die infolge des vom Rechenelement ausgegebenen Ausgangsignals die Signalleitung auf einen vorgegebenen Signalpegel führt, zwischen Widerstand und Kondensator angeschlossen ist.

5. Verfahren nach Anspruch 2, **dadurch gekennzeichnet, daß** die Meßeinrichtung ein Stellungsgeber für die Stellung eines Fahrpedals ist, wobei ein zweiter Stellungsgeber für die Stellung des Fahrpedals vorgesehen ist, der die Führungsgröße für die elektronische Motorleistungssteuerung ermittelt und wobei die erste Meßeinrichtung zur Überwachung der zweiten vorgesehen ist.

6. Verfahren nach Anspruch 5, **dadurch gekennzeichnet, daß** die Überwachung der Meßeinrichtungen zumindest während der Ausgabe des Ausgangsignals durch das Rechenelement ausgesetzt wird.

7. Verfahren nach Anspruch 1, **dadurch gekennzeichnet, daß** eine Schaltung vorgesehen ist, welche zwei Meßeinrichtungen zur Erfassung der Stellung eines Fahrpedals eine gemeinsame Versorgungsspannungsquelle bildet, wobei das Rechenelement über eine Ausgangsleitung in diese Spannungsversorgungsschaltung im Sinne einer Verminderung der Versorgungsspannung einwirkt und wobei anhand der Signalwerte der beiden Meßeinrichtungen ein Fehlerzustand abgeleitet wird.

8. Vorrichtung zum Testen des gesamten Eingangspfades eines Rechenelements bis hin zur korrekten Adressierung und Speicherung eines Messwertes bei einer Messwerterfassung bei einer Motorleistungssteuerung eines Fahrzeugmotors, mit einer Messeinrichtung (28), die wenigstens den Messwert einer Messgröße für eine Betriebsgröße des Motors oder des Fahrzeugs ermittelt und diese, Messwert einem Rechenelement zur elektronischen Motorleistungssteuerung zuführt, wobei das eine Rechenelement (12, 18) einen Messwert (β) dieser wenigstens einen Messgröße über einen Analog- /Digitalwandler (14) einliest und das Rechenelement (12, 18) zu Test zwecken während des Betriebs durch Ausgabe wenigstens eines Aussangsignals diesen Messwert charakteristisch verändert, wobei das Rechenelement die folgenden Mittel umfasst:
- Signalabgabemittel (602), die ein Ausgangssignal zu vorgegebenen Zeitpunkten abgeben, welches direkt auf den wenigstens einen Eingangskanal, über den der Messwert eingelesen wird, einwirkt oder indirekt durch Verstimmen der Spannung der Versorgungsspannungsquelle der Messeinrichtung auf den Messwert einwirkt, der über den Analog-/Digitalwandle (14) zugeführt wird,
- Erfassungsmittel (606), die den so veränderten Messwert in zeitlicher Korrelation mit der Ausgabe des Ausgangssignals erfassen,
- Vergleichsmittel (608), die den erfassten veränderten Messwertes mit einem vorgegebenen Wert vergleichen,
- Fehlererkennungsmittel (610), die einen Fehler erkennen, wenn der erfasste veränderte Messwert dem vorgegebenen Wert nicht entspricht.

9. Vorrichtung nach Anspruch 8, **dadurch gekennzeichnet, daß** von der Meßeinrichtung eine Meßsignalleitung zu einem Eingang des Rechenelements führt, an der ein Schaltelement angeschlossen ist zum Schalten der Meßsignalleitung auf einen vorgegebenen Signalpegel in Abhängigkeit von einem durch das Rechenelement ausgegebenen Ausgangsignal.

## Claims

1. Method for testing the entire input path of an arithmetic element including the correct addressing and storage of a measured value during the measuring of measured values in an engine power control unit of a vehicle engine, at least one measuring device (28) being provided which determines at least the measured value of a measurement variable for an operational variable of the engine or of the vehicle and this measured value is used in the control of the engine power, an arithmetic element (12, 18) being provided which reads in a measured value (β) of the at least one measurement variable via at least one analog/digital converter (14) and the arithmetic element (12, 18) changing the read-in measured value characteristically for testpieces during the operation of the engine power control unit at predefined times by outputting at least one output signal, the arithmetic element carrying out the following steps for the test:
- an output signal (602), which acts directly or indirectly on an input channel via which the measured value is read in by changing the voltage of the supply voltage source of the measuring device, is output at predefined times,
- the measured value (606) changed in this way is measured in a chronological correlation with the outputting of the output signal,
- the changed measured value is compared with a predefined value (608),
- an error (610) is detected if the changed measured value does not correspond to the predefined value.

2. Method according to Claim 1, **characterized in that** a measuring signal line leads from the measuring device to an input of the arithmetic element, the signal level on this line being drawn to a predefined voltage level by the output signal which is output by the arithmetic element.

3. Method according to Claim 2, **characterized in that** this voltage level is outside the measuring signal level range of the measuring device and preferably constitutes earth.

4. Method according to Claim 2, **characterized in that** the measured value is fed to the arithmetic element via a resistor and a capacitor which is connected to earth, the signal line which places the signal line at a predefined signal level owing to the output signal which is output by the arithmetic element being connected between the resistor and capacitor.

5. Method according to Claim 2, **characterized in that** the measuring device is a position sensor for the position of an accelerator pedal, a second position sensor for the position of the accelerator pedal which determines the control variable for the electronic engine power control unit being provided, and the first measuring device being provided for monitoring the second.

6. Method according to Claim 5, **characterized in that** the monitoring of the measuring devices is suspended at least during the outputting of the output signal by the arithmetic element.

7. Method according to Claim 1, **characterized in that** a circuit is provided which forms two measuring devices for measuring the position of an accelerator pedal [lacuna] forms a common supply voltage source, the arithmetic element acting on this voltage supply circuit via an output line with the effect of reducing the supply voltage, and an error state being derived by reference to the signal values of the two measuring devices.

8. Device for testing the entire input path of an arithmetic element including the correct addressing and storage of a measured value during the measurement of a measured value in an engine power control unit of a vehicle engine, having a measuring device (28) which determines at least the measured value of a measurement variable for an operating variable of the engine or of the vehicle and feeds this measured value to an arithmetic element for electronically controlling the power of the engine, the arithmetic element (12, 18) reading in a measured value (β) of this at least one measurement variable via an analog/digital converter (14), and the arithmetic element (12, 18) changing this measured value characteristically for test purposes by outputting at least one output signal during the operation, the arithmetic element comprising the following means:
- signal output means (602) which, at predefined times, output an output signal which acts directly on the at least one input channel via which the measured value is read in, or indirectly by tuning the voltage of the supply voltage source of the measuring device to the measured value which is fed via the analog/digital converter (14),
- measuring means (606) which measure the measured value changed in this way in a chronological correlation with the outputting of the output signal,
- comparison means (608) which compare the changed measured value with a predefined value,
- error detection means (610) which detect an error if the changed measured value does not correspond to the predefined value.

9. Device according to Claim 8, **characterized in that** a measuring signal line leads from the measuring device to an input of the arithmetic element, to which measuring signal line a switching element is connected for switching the measuring signal line to a predefined signal level as a function of an output signal which is output by the arithmetic element.

## Revendications

1. Procédé pour contrôler tout le chemin d'entrée d'un élément de calcul jusqu'à ce qu'une valeur de mesure soit correctement adressée et enregistrée, lors d'une saisie de la valeur de mesure pour un réglage de la puissance motrice d'un moteur de véhicule, selon lequel au moins une installation de mesure (28) détermine au moins la valeur de mesure d'une grandeur mesurée pour une grandeur de fonctionnement du moteur ou du véhicule, et cette valeur de mesure est évaluée pour la commande de puissance motrice, un élément de calcul (12, 18) lit une valeur de mesure (β) de la grandeur mesurée au moins unique à l'aide d'au moins un convertisseur analogique-numérique (14) et, dans un but de contrôle pendant le fonctionnement de la commande de puissance du moteur à des instants prédéterminés, l'élément de calcul (12, 18) modifie de façon caractéristique la valeur de mesure lue en émettant au moins un signal de sortie, l'élément de calcul exécutant les étapes suivantes pour le contrôle :
- émission à des instants prédéterminés d'un signal de sortie (602) qui agit directement sur un canal d'entrée par lequel la valeur de mesure est lue, ou indirectement sur un canal d'entrée par lequel la valeur de mesure est lue au moyen d'une modification de la tension de la source de tension d'alimentation,
- saisie de la valeur de mesure (606) ainsi modifiée en corrélation temporelle avec l'émission du signal de sortie,
- comparaison de la valeur de mesure saisie modifiée avec une valeur prédéterminée (608),
- reconnaissance d'une erreur (610) lorsque la valeur de mesure saisie modifiée ne correspond pas à la valeur prédéterminée.

2. Procédé selon la revendication 1,
**caractérisé en ce qu'**
une ligne de signal de mesure mène de l'installation de mesure à une entrée de l'élément de calcul, le niveau de signal sur cette ligne étant établi à un niveau de tension prédéterminé au moyen du signal de sortie émis par l'élément de calcul.

3. Procédé selon la revendication 2,
**caractérisé en ce que**
le niveau de tension se situe à l'extérieur de la zone de niveau de signal de mesure pour l'installation de mesure, représente de préférence la masse.

4. Procédé selon la revendication 2,
**caractérisé en ce que**
la valeur de mesure est amende à l'élément de calcul par l'intermédiaire d'une résistance et d'un condensateur raccordé à la masse, la ligne de signaux qui est mise à un niveau de signal prédéterminé suite à un signal de sortie émis par l'élément de calcul, étant raccordée entre la résistance et le condensateur.

5. Procédé selon la revendication 2.
**caractérisé en ce que**
l'installation de mesure est un transmetteur de position pour la position de la pédale d'accélérateur, en prévoyant alors pour la position de la pédale d'accélérateur un deuxième transmetteur de position qui élabore une grandeur pilote pour la commande électronique de la puissance du moteur, la première installation de mesure étant prévue pour surveiller la deuxième.

6. Procédé selon la revendication 5,
**caractérisé en ce que**
la surveillance des installations de mesure est interrompue par l'élément de calcul au moins pendant l'émission du signal de sortie.

7. Procédé selon la revendication 1,
**caractérisé en ce qu'**
un circuit forme avec deux installations de mesure destinées à enregistrer la position d'une pédale d'accélérateur, une source de tension d'alimentation commune, l'élément de calcul agissant par l'intermédiaire d'une ligne de sortie dans ce circuit d'alimentation en courant au sens d'une réduction de la tension d'alimentation et un état des erreurs étant déduit à l'aide des valeurs de signal des deux installations de mesure.

8. Dispositif pour contrôler tout le chemin d'entrée d'un élément de calcul jusqu'à ce qu'une valeur de mesure soit correctement adressée et enregistrée lors d'une saisie de la valeur de mesure pour un réglage de la puissance motrice d'un moteur de véhicule, avec une installation de mesure (28) qui détermine au moins la valeur de mesure d'une grandeur mesurée pour une grandeur de fonctionnement du moteur ou du véhicule, cette valeur de mesure étant amenée à un élément de calcul pour une commande électronique de puissance du moteur, dans lequel l'un des éléments de calcul (12, 18) lit une valeur de mesure (β) de cette grandeur mesurée au moyen d'au moins un convertisseur analogique-numérique (14), et l'élément de calcul (12, 18), dans un but de contrôle pendant le fonctionnement, modifie de façon caractéristique la valeur de mesure lue en émettant au moins un signal de sortie, l'élément de calcul comprenant les moyens suivants :
- des moyens d'émission de signaux (602) qui émettent à des instants prédéterminés un signal de sortie qui agit directement sur au moins un canal d'entrée par lequel la valeur de mesure est lue, ou indirectement en désaccordant la tension de la source de tension d'alimentation de l'installation de mesure sur la valeur de mesure qui est amenée par l'intermédiaire du convertisseur analogique-numérique (14),
- des moyens de détection (606) qui saisissent la valeur de mesure ainsi modifiée en corrélation temporelle avec l'émission du signal de sortie,
- des moyens de comparaison (608) qui comparent la valeur de mesure saisie modifiée avec une valeur prédéterminée,
- des moyens de reconnaissance d'erreurs (610) qui reconnaissent une erreur lorsque la valeur de mesure saisie modifiée ne correspond pas à la valeur prédéterminée.

9. Dispositif selon la revendication 8.
**caractérisé en ce qu'**
une ligne de signal de mesure mène de l'installation de mesure à une entrée de l'élément de calcul à laquelle est raccordé un élément de commutation pour connecter la ligne de signal de mesure à un niveau de signal prédéterminé en fonction d'un signal de sortie émis par l'élément de calcul.
